Europäisches Patentamt

European Patent Office

Office européen des brevets

(19)

(11) Numéro de publication: **0 310 724 B1**

(12) **FASCICULE DE BREVET EUROPEEN**

(45) Date de publication de fascicule du brevet: **06.05.92**

(51) Int. Cl.5: **B29D 9/00**, B32B 25/20, F16L 11/04, F16L 11/08

(21) Numéro de dépôt: **87402224.7**

(22) Date de dépôt: **07.10.87**

(54) **Procédé de production d'un matériau composite comprenant un élastomère de silicone associé à un autre élastomère ayant des propriétés complémentaires de celles de l'élastomère de silicone.**

(43) Date de publication de la demande:
**12.04.89 Bulletin 89/15**

(45) Mention de la délivrance du brevet:
**06.05.92 Bulletin 92/19**

(84) Etats contractants désignés:
**BE DE ES GB IT LU NL SE**

(56) Documents cités:
**FR-A- 1 489 261**
**GB-A- 778 100**

(73) Titulaire: **HUTCHINSON**
**2 rue Balzac**
**F-75008 Paris(FR)**

(72) Inventeur: **Blin, Philippe**
**Les Macquinières**
**F-37260 Monts(FR)**

(74) Mandataire: **Orès, Bernard et al**
**Cabinet ORES 6, Avenue de Messine**
**F-75008 Paris(FR)**

EP 0 310 724 B1

## Description

La présente invention est relative à un procédé de production d'un matériau composite comprenant un élastomère de silicone, seul ou mélangé, associé à un autre élastomère vulcanisable présentant des propriétés complémentaires de celles de l'élastomère de silicone.

Les raccords utilisés dans les autobus et autocars sont actuellement réalisés en élastomère de silicone en raison de la bonne tenue aux hautes températures de ce matériau.

Toutefois, le caoutchouc de silicone est un produit relativement coûteux; de plus, il existe d'autres élastomères dont les propriétés mécaniques et la tenue, à certains agents chimiques, et notamment à l'antigel, aux huiles et aux carburants, sont meilleures que celles des élastomères de silicone.

La solution optimale serait donc de pouvoir associer un élastomère de silicone à un autre élastomère présentant des propriétés complémentaires de celles des élastomères de silicone, pour pouvoir disposer d'un matériau composite plus performant et d'un prix de revient abaissé de façon significative par rapport à celui des élastomères de silicone.

Cependant, dans la pratique, un tel matériau n'était pas envisageable jusqu'à présent : de façon classique, les élastomères doivent être vulcanisés pour conserver de façon permanente des caractéristiques mécaniques et des caractéristiques d'élasticité, et de stabilité dimensionnelle, convenables. Or il est impossible de vulcaniser conjointement un élastomère de silicone associé à un autre élastomère, attendu que l'élastomère de silicone perd ses propriétés mécaniques et autres au contact d'un autre élastomère et vulcanise mal ou pas du tout.

On connaît le Brevet britannique GB-778 100 (MIDLAND SILICONES LTD) qui décrit des articles à structure stratifiée comprenant des couches alternées constituées par des élastomères de silicones et des élastomères appartenant à une autre famille.

Les élastomères de silicones utilisables dans le cadre de l'invention MIDLAND SILICONES, sont constitués notamment de polysiloxanes composés essentiellement d'unités de di-siloxane (même si des unités de mono- et tri-siloxane peuvent être utilisées) : de façon plus précise, il s'agit de polysiloxanes contenant des substituants alkényles dans lesquels au moins 0,001 mole % des unités polymères comporte au moins un radical alkényle lié à un atome de silicium avant de subir des traitements de vulcanisation, les radicaux organiques restant dans les siloxanes étant des radicaux particuliers, décrits à la page 5, lignes 5-8. Des exemples de siloxanes utilisables sont décrits à la page 2, lignes 84-91.

En ce qui concerne les élastomères appartenant à une famille autre que la famille constituée par les élastomères de silicones et utilisables dans le cadre de l'invention MIDLAND, ils sont constitués par des élastomères dans lesquels au moins 0,5 mole % des unités polymères contiennent des sites résiduels non saturés, essentiellement constitués par une liaison C = C correspondant à la présence d'un composé vinylique (destiné à polymériser avec un diène, tel que métadiène, diméthylbutadiène, isoprène, chloroprène), à savoir à quelque composé que ce soit ayant une liaison C = C dans sa molécule, dont les exemples sont décrits à la page 2, lignes 68 à 73.

On connaît également le Brevet français FR-1 489 261 (DOW CORNING CORPORATION) qui concerne un procédé permettant de faire adhérer des élastomères de silicones à des élastomères organiques et, en particulier, au néoprène.

Le procédé DOW CORNING consiste essentiellement à préparer un mélange adhésif destiné à être disposé entre une surface d'élastomères de silicones et une surface d'élastomères organiques.

Ce mélange se compose d'un élastomère qui est notamment constitué par un élastomère de silicone vulcanisable à température ambiante et d'un isocyanate organique, les pourcentages en poids de ces deux composants allant de 20% à 80% par rapport à leur poids total. L'adhérence, après application de ce mélange adhésif, entre les deux surfaces précitées est donc obtenue par vulcanisation du mélange, qui est vulcanisable - il faut le souligner - aux température et pression ambiantes.

L'utilisation d'une pression, obtenue à l'aide d'une presse, et d'une température supérieures à la pression et à la température ambiantes présente, dans le cadre du Brevet DOW CORNING, seulement un caractère facultatif, et ce dans le seul but d'accélérer le processus, sans que cela soit absolument indispensable.

Toutefois, s'il est vrai que le Brevet DOW CORNING décrit la possibilité de préparer et utiliser un moyen d'accrochage constitué par un élastomère, il est aussi vrai que cet élastomère est un élastomère particulier, à savoir un élastomère de silicone, qui est vulcanisable à la température ambiante, ce qui signifie qu'il s'agit essentiellement d'une colle ou d'un adhésif (en outre, il y a lieu de souligner que l'élastomère coopère avec un isocyanate organique).

En outre, la structure stratifiée divulguée par MIDLAND est une structure bicomposite, à savoir sans élastomère intermédiaire entre l'élastomère de silicone et l'élastomère appartenant à une autre famille.

La présente invention s'est en conséquence donné pour but de pourvoir à un procédé de production d'un matériau composite dans lequel un élastomère de silicone peut être associé, en particulier, à un autre élastomère vulcanisable, et dont la vulcanisation peut être réalisée en une seule fois, les deux composants élastomères pouvant être vulcanisés simultanément sans que l'élastomère de silicone perde ses propriétés intéressantes.

La présente invention a pour objet un procédé de production de matériaux composites du type défini plus haut, qui consiste à associer un élastomère de silicone avec un autre élastomère présentant des propriétés complémentaires de celles de l'élastomère de silicone, en interposant entre ces deux composants élastomères une couche d'un moyen d'accrochage de ces deux composants, constitué par un élastomère, et à soumettre la structure composite ainsi formée à un traitement de réticulation permettant la liaison de cette couche élastomère intermédiaire aux composants élastomères extrêmes, lequel procédé est caractérisé en ce qu'on utilise une couche intermédiaire constituée par un élastomère vulcanisable à chaud, ce qui permet à l'élastomère interposé de jouer aussi le rôle de couche de greffage des deux élastomères extrêmes entre lesquels il est interposé, et en ce que cet élastomère intermédiaire est soumis au traitement de réticulation conjointement et simultanément avec les composants élastomères extrêmes entre lesquels il est interposé.

Selon un mode de mise en oeuvre avantageux du procédé conforme à la présente invention, l'élastomère vulcanisable à chaud est un copolymère greffé EPDM-silicone.

Selon un autre mode de mise en oeuvre avantageux du procédé conforme à la présente invention, le copolymère greffé EPDM-silicone est un EPDM modifié par greffage en pourcentage approprié d'un polysiloxane également approprié.

Conformément à un autre mode de mise en oeuvre avantageux du procédé conforme à la présente invention, l'EPDM est modifié par greffage de 20 à 30 % environ dudit polysiloxane.

Conformément à l'invention, l'autre élastomère, associé à l'élastomère de silicone et présentant des propriétés complémentaires par rapport à celui-ci, est pris dans le groupe qui comprend les élastomères vulcanisables tels que l'EPDM, l'EPM, le caoutchouc nitrile, les fluoroélastomères, les polyéthylènes chlorosulfonés ou chlorés, les caoutchoucs acryliques et les caoutchoucs d'épichlorhydrine.

Le procédé selon la présente invention permet donc d'obtenir un matériau composite du type défini plus haut qui se prête, entre autres, à la réalisation de structures tubulaires du type des durites et plus généralement des tuyaux, des tubes, des gaines d'isolation thermique et analogues.

Parmi les propriétés intéressantes des élastomères associées à l'élastomère de silicone, il y a lieu de mentionner leur bonne tenue vis-à-vis des fluides tels qu'antigels, huiles, carburants, produits chimiques, gaz, etc... et leurs propriétés physiques telles que résistance à la perméabilité, à l'abrasion, etc...

Le procédé conforme à la présente invention peut être mis en oeuvre comme décrit dans l'exemple qui va suivre, qui est donné uniquement à titre d'illustration de l'objet de l'invention et n'a aucun caractère limitatif.

EXEMPLE

Production d'un tuyau avec accrochage par greffage

On applique sur la paroi externe d'un tube en un élastomère approprié, tel qu'EPDM par exemple, obtenu par extrusion, une couche d'un élastomère de greffage tel que, par exemple, le polymère greffé EPDM-silicone commercialisé sous le nom de "S.E.P." par la Société japonaise SHIN-ETSU, soit en film, soit en dissolution dans un solvant volatil approprié ; puis, on extrude sur la structure ainsi formée un tube en élastomère de silicone.

On vulcanise l'ensemble à chaud et éventuellement sous pression.

On obtient un tube en matériau composite dont les propriétés du composant élastomère de silicone ne sont pas altérées.

L'originalité de l'invention en instance consiste à utiliser comme élastomère d'accrochage intermédiaire entre un élastomère de silicone et un autre élastomère appartenant à une autre famille, un élastomère vulcanisable à chaud. En effet, il fallait vaincre le préjugé technique qui poussait un homme du métier à écarter le recours à la vulcanisation à chaud, compte tenu du fait qu'un technicien en la matière sait parfaitement qu'il est impossible de vulcaniser un élastomère de silicone en présence d'un autre élastomère, attendu que l'élastomère de silicone perd ses propriétés mécaniques au contact d'un autre élastomère et vulcanise mal ou pas du tout. Or, dans le cadre de l'invention pendante, il a été trouvé qu'il est possible de préserver les propriétés d'un élastomère de silicone associé à un autre élastomère essentiellement en effectuant la vulcanisation simultanée entre ceux-ci, au lieu de vulcaniser l'un sur l'autre vulcanisé préalablement (vulcanisation en deux temps), en interposant entre eux un élastomère de greffage.

## Revendications

1. Procédé de production de matériaux composites comprenant un élastomère de silicone, consistant à associer un élastomère de silicone avec un autre élastomère présentant des propriétés complémentaires de celles de l'élastomère de silicone, en interposant entre ces deux composants élastomères une couche d'un moyen d'accrochage de ces deux composants constitué par un élastomère, et à soumettre l'élastomère interposé à un traitement de réticulation permettant la liaison de cette couche élastomère intermédiaire aux composants élastomères extrêmes, lequel procédé est caractérisé en ce qu'on utilise une couche intermédiaire constituée par un élastomère vulcanisable à chaud, ce qui permet à l'élastomère interposé de jouer aussi le rôle de couche de greffage des deux élastomères extrêmes entre lesquels il est interposé, et en ce que cet élastomère intermédiaire est soumis au traitement de réticulation conjointement et simultanément avec les composants élastomères extrêmes entre lesquels il est interposé.

2. Procédé selon la revendication 1, caractérisé en ce que l'élastomère vulcanisable à chaud est constitué par un copolymère greffé EPDM-silicone.

3. Procédé selon la revendication 2, caractérisé en ce que le copolymère greffé EPDM-silicone est un EPDM modifié par greffage en pourcentage approprié d'un polysiloxane également approprié.

4. Procédé selon la revendication 3, caractérisé en ce que l'EPDM est modifié par greffage de 20 à 30 % environ dudit polysiloxane.

5. Procédé selon l'une quelconque des revendications 1 à 4, caractérisé en ce que l'autre élastomère associé à l'élastomère de silicone et présentant des propriétés complémentaires par rapport à celui-ci est pris dans le groupe qui comprend les élastomères vulcanisables tels que l'EPDM, l'EPM, le caoutchouc nitrile, les fluoroélastomères, les polyéthylènes chlorosulfonés ou chlorés, les caoutchoucs acryliques et les caoutchoucs d'épichlorhydrine.

## Claims

1. A method of producing composite materials comprising a silicone elastomer consisting in associating a silicone elastomer with another elastomer having properties which match those of the silicone elastomer, interposing between these two elastomer components a layer of a means of attaching these two components, consisting of an elastomer, and of subjecting the interposed elastomer to a cross-linking technique which permits of a bonding of this intermediate elastomer layer with the extreme elastomer components, the said method being characterised in that an intermediate layer is used which consists of a hot-vulcanising elastomer, which allows the interposed elastomer to act also as a layer for the attachment of the two extreme elastomers between which it is interposed, and in that this intermediate elastomer is subject to the cross-linking treatment jointly and simultaneously with the extreme elastomer components between which it is interposed.

2. A method according to Claim 1, characterised in that the hot-vulcanising elastomer is constituted by an EPDM-silicone grafted copolymer.

3. A method according to Claim 2, characterised in that the EPDM-silicone grafted copolymer is an EPDM modified by grafting to a suitable percentage of a likewise suitable polysiloxane.

4. A method according to Claim 3, characterised in that the EPDM is modified by grafting 20 to 30% approx. of the said polysiloxane.

5. A method according to any one of Claims 1 to 4, characterised in that the other elastomer associated with the silicone elastomer and having properties which match the latter is taken from the group comprising vulcanisable elastomers such as EPDM, EPM, nitrile rubber, fluoro-elastomers, chlorosulphanated or chlorinated polyethylenes, acrylic rubbers and epichlorohydrine rubbers.

## Patentansprüche

1. Verfahren zur Herstellung von Verbundwerkstoffen, umfassend ein Siliconelastomeres, bei dem ein Siliconelastomeres mit einem anderen Elastomeren kombiniert wird, das komplementäre Eigenschaften zu denjenigen des Siliconelastomeren aufweist, indem zwischen diese beiden elastomeren Komponenten eine aus einem Elastomeren bestehende Lage eines Haftmittels für diese beiden Komponenten angeordnet und das Zwischen-Elastomere einer Vernetzungsbehandlung unterworfen wird, die die Verbindung dieser elastomeren Zwischenschicht mit den Außen-Elastomeren ermöglicht, dadurch **gekennzeichnet,** daß man eine zwischenschicht verwendet, die aus einem heißvulkanisierbaren Elastomeren besteht, was dem Zwischen-Elastomeren ermöglicht, auch die Rolle der Pfropfschicht der beiden Außen-Elastomeren zu spielen, zwischen denen es angeordnet ist und daß dieses Zwischen-Elastomere zusammen und gleichzeitig mit den AußenElastomeren, zwischen denen es angeordnet ist, einer Vernetzungsbehandlung unterworfen wird.

2. Verfahren nach Anspruch 1, dadurch **gekennzeichnet,** daß das heißvulkanisierbare Elastomere aus einem Pfropfcopolymeren EPDM-Silicon besteht.

3. Verfahren nach Anspruch 2, dadurch **gekennzeichnet,** daß das heißvulkanisierbare Elastomere ein Pfropfcopolymeres EPDM-Silicon ist, das aus einem EPDM modifiziert mittels Aufpfropfen in geeignetem prozentualem Anteil eines ebenfalls geeigneten Polysiloxans besteht.

4. Verfahren nach Anspruch 3, dadurch **gekennzeichnet,** daß das EPDM durch Aufpfropfen von etwa 20 bis 30 % des Polysiloxans modifiziert ist.

5. Verfahren nach einem der Ansprüche 1 bis 4, dadurch **gekennzeichnet,** daß das andere mit dem Siliconelastomeren kombinierte Elastomere aus der Gruppe ausgewählt ist, die die vulkanisierbaren Elastomeren umfaßt, wie EPDM, EPM, Nitrilkautschuk, die Fluorelastomeren, die chlorsulfonierten oder chlorierten Polyethylene, die Acrylkautschuke und die Epichlorhydrinkautschuke.